# EUROPEAN PATENT SPECIFICATION

(11) **EP 0 881 066 B1**
(45) Date of publication and mention of the grant of the patent: **17.04.2002**
(21) Application number: 98202739.3
(22) Date of filing: 14.10.1994
(51) Int. Cl.: B32B 7/04, C09J 7/02

(54) **Adhesive laminate**
Klebendes Laminat
Stratifié adhésif

(30) Priority: 10.11.1993 US 150692
(43) Date of publication of application: 02.12.1998
(62) Divisional of application: 94930100.6
(73) Proprietor: MINNESOTA MINING AND MANUFACTURING COMPANY, St. Paul, Minnesota 55133-3427 (US)
(72) Inventor: Johnson, Michael A., PO Box 33427, Saint Paul, MN 55133-3427 (US); Willett, Peggy S., PO Box 33427, Saint Paul, MN 55133-3427 (US); Tumey, Michael L., PO Box 33427, Saint Paul, MN 55133-3427 (US); George, Clayton A., PO Box 33427, Saint Paul, MN 55133-3427 (US); Itoh, Akira, PO Box 33427, Saint Paul, MN 55133-3427 (US)
(74) Representative: Ahner, Francis

(56) References cited:
- WO-A-92/08073
- US-A- 3 916 046
- US-A- 5 086 088
- DATABASE WPI Section Ch, Week 7822 Derwent Publications Ltd., London, GB; Class A17, AN 78-39058A XP002082928 & JP 53 042280 A (NITTO ELECTRIC IND CO) , 17 April 1978

## Description

### FIELD OF THE INVENTION

The present invention relates to an adhesive composite.

### BACKGROUND OF THE INVENTION

Thermosettable pressure-sensitive adhesives are known and have utility in a number of industries including assembly of automobiles and appliances. Such adhesives are described in U.S. Patent No. 5,086,088 (Kitano et al.). These adhesives are pressure-sensitive, i.e., tacky at the temperature of bonding, and are typically used in the form of a pressure-sensitive adhesive transfer tape in which the layer of adhesive is provided on a release liner. The transfer tape can further include a nonwoven web for reinforcement of the adhesive layer. In use, the transfer tape bonds one surface to another surface at ambient temperature. The surfaces are then heated to a temperature sufficient to cure the adhesive to a thermoset state.

In some applications it would be desirable to have a thermosettable pressure-sensitive adhesive tape that has a non-tacky surface that can be activated to an adhesive state at the temperature of use.

One such application is in some automotive assembly lines where the doors are temporarily attached to the vehicle body by bolting the hinges on to the body prior to painting. The door is positioned on the vehicle by aligning the door hinges on slotted holes in the car body, and then fastening the hinges to the body with one or more washers and corresponding bolts. After the vehicle body has been painted, the doors are removed from the hinges so that interior parts can be installed. It would be desirable to have the washers fixed in place on the hinges so that when the doors arc re-attached, they will be precisely aligned without having to take time to re-align them.

Japanese Patent Publication (Kokai) No. 64-67417 describes a washer fixed to a door hinge with a tacky thermosetting adhesive film. The washer serves as an alignment member for a bolt that is used to join the hinge to a door. The film is tacky on both sides and is prone to contamination from dust, oil, etc., which can be found in assembly plants. The contaminated surface, in turn, must be cleaned to ensure an adequate bond. The film also tends to be very thin so that it can be difficult to handle, and removing the liners so that the film can be bonded to the washers and the bolted surfaces can be a labor intensive operation which prohibits automation of the assembly line.

It is known to saturate a nonwoven fabric as a support with a thermosettable adhesive to increase the rigidity of the adhesive so that it can be handled more easily, but this would add cost and does not get around the other deficiencies of the above-described adhesive film.

Japanese Patent Publication (Kokai) No. 53-42280 describes a composite sheet having a sheet of thermosetting material that is coated with a heat fusing material. The heat fusing material is intended to coat the thermosetting resin sheet so that workers can avoid direct skin contact with the thermosetting adhesive. The thermosetting material and the heat fusing material are mutually non-reactive and compatible, and characterized by a maximum difference in fusing temperatures of 50°C. The heat fusing material melts and mixes with the thermosetting material before it is hardened.

Japanese Laid-Open Patent Application JP 114-189885 describes a thermosettable pressure-sensitive adhesive made from acrylate copolymers and epoxy resin. The adhesive composition can be coated onto one or both sides of a nonwoven material, which acts as a pre-preg to increase the strength of the adhesive sheet.

It would be desirable to have a thermosettable pressure-sensitive adhesive tape that is substantially tack-free at room temperature (about 21°C) on at least one major surface, but both major surfaces of the tape can be adapted for bonding to other substrates.

U.S. Patent n° 5,032,209 discloses that semi-crystalline polymers can have predetermined amounts of their surfaces rendered quasi-amorphous by irradiation. The so-modified polymer surfaces are said to display enhanced heat sealability so as to accept bonding to other materials.

Japanese Patent Publication n° 53042280 describes a two-layer composite sheet in which the first layer includes a hot melt material (e.g., EVA copolymer, alkyl phenol resin, polyacrylic ester, PVC, shellac or gelatine), and a second layer, which is separate and distinct from the first layer, includes a thermosetting resin (e.g., epoxy resin, unsaturated polyester resin or silicone resin).

International Patent Publication n° 94/05338 describes thermoplastic interpenetrating networks useful as, for example, sealants or orthopaedic casting materials.

### SUMMARY OF THE INVENTION

The invention provides an adhesive composite comprising a layer of thermosettable pressure-sensitive adhesive and a layer of hot melt adhesive that is substantially tack-free at room temperature. Preferably, the hot melt adhesive has a heat activation temperature of from about 50°C to the temperature used to cure the thermosettable adhesive.

The invention also provides an adhesive composite for bonding to a washer which will bond to the washer at ambient temperature, and for further bonding of the washer to a surface after a heating cycle, and a washer bonded with the composite.

The invention also provides a method for bonding the composite to washers.

### BRIEF DESCRIPTION OF THE DRAWINGS

The invention will now be described in greater detail with reference to the accompanying drawings, in which:
FIG. 1 is a top view of a washer (8) having a sheet material of the invention (7) adhered thereto.
FIG. 2 is a cross-sectional view along the line 4b of FIG. 4a. The sheet material (7) has two layers (9) and (10).
FIG. 3 is a sectional view showing the embodiment of FIG. 4a having a bolt (11) inserted therein for joining a door hinge (12) to a door frame (13).

### DETAILED DESCRIPTION OF THE INVENTION

The invention for which protection is sought is defined in claim 1.

The sheet material of the invention includes a layer of a thermosettable PSA which is tacky and pressure-sensitive at room temperature, and which cures to a thermoset adhesive after healing. This type of melt-flowable sheet material has utility in bonding together two surfaces with the sheet bonding to a first surface on the thermosettable PSA side at a lower temperature, i.e., about room temperature, and then bonding to a second surface on the melt-flowable side at a higher temperature, i.e., the melt temperature of the melt-flowable layer. When the substrates are heated at the higher temperature, the PSA also cures to form a thermoset adhesive having very high bond strengths. In this application, the melt-flowable layer may be selected for minimal flow at the higher temperatures so that the melt-flowable material does not flow out of the bond.

Preferred melt-flowable layers include the polyesters mentioned below and functionalized olefinic polymers.

Preferred materials for the melt-flowable layer include polycaprolactones, and polyesters having hydroxyl and carboxyl termination and are semi-crystalline at room temperature. More preferred are hydroxyl terminated polyesters that are semi-crystalline at room temperature. A material that is "semi-crystalline" displays a crystalline melting point as determined by DSC, preferably with a maximum melting point of about 200°C.

Crystallinity in a polymer is also observed as a clouding or opacifying of a sheet that had been heated to an amorphous state as it cools. When the polyester polymer is heated to a molten state and knife coated onto a liner to form a sheet, it is amorphous and the sheet is observed to be clear and fairly transparent to light. As the polymer in the sheet material cools, crystalline domains form and the crystallization is characterized by the clouding of the sheet to a translucent or opaque state. The degree of crystallinity may be varied in the polymers by mixing in any compatible combination of amorphous polymers and semi-crystalline polymers having varying degrees of crystallinity. It is generally preferred that material heated to an amorphous state be allowed sufficient time to return to its semi-crystalline state before painting so that the paint is applied to a uniformly consistent surface. The clouding of the sheet provides a convenient non-destructive method of determining that crystallization has occurred to some degree in the polymer.

The polymers may include nucleating agents to increase the rate of crystallization at a given temperature. Paint catalysts such as para-toluene sulfonic acid may be added to the polyester, as well as melamines to improve the adhesion of the melt-flowable layer to paint and coatings.

The preferred polyesters are solid at room temperature. Preferred polyester materials have a number average molecular weight of about 7500 to 200,000, more preferably from about 10,000 to 50,000, and most preferably, from about 15,000 to 30,000.

Polyester components useful in the invention comprise the reaction product of dicarboxylic acids (or their diester equivalents) and diols. The diacids (or diester equivalents) can be saturated aliphatic acids containing from 4 to 12 carbon atoms (including branched, unbranched, or cyclic materials having 5 to 6 carbon atoms in a ring) and/or aromatic acids containing from 8 to 15 carbon atoms. Examples of suitable aliphatic acids are succinic, glutaric, adipic, pimelic, suberic, azelaic, sebacic, 1,12-dodecanedioic, 1,4-cyclohexanedicarboxylic, 1,3-cyclopentanedicarboxylic, 2-methylsuccinic, 2-methylpentanedioic, 3-methylhexanedioic acids, and the like. Suitable aromatic acids include terephthalic acid, isophthalic acid, phthalic acid, 4,4'-benzophenone dicarboxylic acid, 4,4'-diphenylmethanedicarboxylic acid, 4,4'-diphenylthioether dicarboxylic acid, and 4,4'-diphenylamine dicarboxylic acid. Preferably the structure between the two carboxyl groups in the diacids contain only carbon and hydrogen, and more preferably, the structure is a phenylene group. Blends of the foregoing diacids may be used.

The diols include branched, unbranched, and cyclic aliphatic diols having from 2 to 12 carbon atoms. Examples of suitable diols include ethylene glycol, 1,3-propylene glycol, 1,2-propylene glycol, 1,4-butanediol, 1,3-butanediol, 1,5-pentanediol, 2-methyl-2,4-pentanediol, 1,6-hexanediol, cyclobutane-1,3-di(2'-ethanol), cyclohexane-1,4-dimethanol, 1,10-decanediol 1,12-dodecanediol, and neopentyl glycol. Long chain diols including poly(oxyalkylene)glycols in which the alkylene group contains from 2 to 9 carbon atoms, preferably 2 to 4 carbon atoms, may also be used. Blends of the foregoing diols may be used.

Useful, commercially available hydroxyl terminated polyester materials include various saturated linear, semi-crystalline copolyesters available from Hüls America, Inc. such as Dynapol™ S1401, Dynapol™ S1402, Dynapol™ S1358, Dynapol™ S1359, Dynapol™ S1227, and Dynapol™ S1229. Useful saturated, linear amorphous copolyesters available from Hüls America, Inc., include Dynapol™ S1313 and Dynapol™ S1430.

The foregoing polyesters may be cast into sheets by melting the polyester resin at temperatures from about 100° to 150°C to form a molten material and knife coating onto a liner such as a silicone release coated paper. The polyester materials may further include fillers as detailed below for an epoxy polyester composition.

Also preferred for the melt-flowable layer are epoxy polycaprolactone compositions and epoxy polyester hot melt compositions. Polycaprolactones are biodegradable in soil. Especially preferred are epoxy polyester hot melt compositions which cure on exposure to radiation to provide high strength sealing materials having good adhesion to the substrate to which it is adhered. The epoxy-containing material contributes to the ultimate strength and heat resistance of the composition, while the polyester component allows the sheet material to conform to the substrate and provides initial adhesion to the substrate, and the photoinitiator permits the composition to cure (i.e., covalently cross-link) upon exposure to radiation. Optionally, the hot melt compositions of the invention may also include a hydroxyl-containing material to impart flexibility and toughness to the hot melt compositions. Preferred polyesters for the epoxy/polyester sheet material are those hydroxyl and carboxyl terminated functional materials described above. Especially preferred are hydroxyl terminated polyesters having some degree of crystallinity.

Epoxy-containing materials useful in the compositions of the invention are any organic compounds having at least one oxirane ring 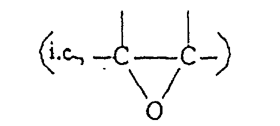 polymerizable by a ring opening reaction. Such materials, broadly called epoxides, include both monomeric and polymeric epoxides and can be aliphatic, cycloaliphatic, or aromatic. These materials generally have, on the average, at least two epoxy groups per molecule (preferably more than two epoxy groups per molecule). The "average" number of epoxy groups per molecule is defined as the number of epoxy groups in the epoxy-containing material divided by the total number of epoxy molecules present. The polymeric epoxides include linear polymers having terminal epoxy groups (e.g., a diglycidyl ether of a polyoxyalkylcnc glycol), polymers having skeletal oxirane units (e.g., polybutadiene polyepoxide), and polymers having pendent epoxy groups (e.g., a glycidyl methacrylate polymer or copolymer). The molecular weight of the epoxy-containing material may vary from 58 to about 100,000 or more. Mixtures of various epoxy-containing materials can also be used in the hot melt compositions of the invention.

Useful epoxy-containing materials include those which contain cyclohexene oxide groups such as the epoxycyclohexanecarboxylates, typified by 3,4-epoxycyclohexylmethyl-3,4-epoxycyclohexanecarboxylate, 3,4-epoxy-2-methylcyclohexylmethyl-3,4-epoxy-2-methylcyclohexane carboxylate, and bis(3,4-epoxy-6-methylcyclohexylmethyl) adipate. For a more detailed list of useful epoxides of this nature, reference may be made to U.S. Patent No. 3,117,099,

Further epoxy-containing materials which are particularly useful in the practice of this invention include glycidyl ether monomers of the formula 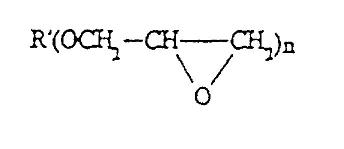 where R' is alkyl or aryl and n is an integer of 1 to 6. Examples are the glycidyl ethers of polyhydric phenols obtained by reacting a polyhydric phenol with an excess of chlorohydrin such as epichlorohydrin (e.g., the diglycidyl ether of 2,2-bis-(2,3-epoxypropoxyphenol) propane). Further examples of epoxides of this type which can be used in the practice of this invention are described in U.S. Patent No. 3,018,262.

There is a host of commercially available epoxy-containing materials which can be used in this invention. In particular, epoxides which are readily available include octadecylene oxide, epichlorohydrin, styrene oxide, vinyl cyclohexene oxide, glycidol, glycidylmethacrylate, diglycidyl ether of Bisphenol A (e.g., those available under the trade designations EPON 828, EPON 1004, and EPON 1001F from Shell Chemical Co., and DER-332 and DER-334, from Dow Chemical Co.), diglycidyl ether of Bisphenol F (e.g., ARALDITE GY281 from Ciba-Geigy), vinylcyclohexene dioxide (e.g., ERL 4206 from Union Carbide Corp.), 3,4-epoxycyclohexylmethyl-3,4-epoxycyclohexene carboxylate (e.g., ERL-4221 from Union Carbide Corp.), 2-(3,4-epoxycylohexyl-5,5-spiro-3,4-epoxy) cyclohexane-metadioxane (e.g., ERL-4234 from Union Carbide Corp.), bis(3,4-epoxycyclohexyl) adipate (e.g., ERL-4299 from Union Carbide Corp.), dipentene dioxide (e.g., ERL-4269 from Union Carbide Corp.), epoxidized polybutadiene (e.g., OXIRON 2001 from FMC Corp.), silicone resin containing epoxy functionality, epoxy silanes (e.g., beta-(3,4-epoxycyclohexyl)ethyltrimethoxy silane and gamma-glycidoxypropyltrimethoxy silane, commercially available from Union Carbide), flame retardant epoxy resins (e.g., DER-542, a brominated bisphenol type epoxy resin available from Dow Chemical Co.), 1,4-butanediol diglycidyl ether (e.g., ARALDITE RD-2 from Ciba-Geigy), hydrogenated bisphenol A-epichlorohydrin based epoxy resins (e.g., EPONEX 1510 from Shell Chemical Co.), and polyglycidyl ether of phenolformaldehyde novolak (e.g., DEN-431 and DEN-438 from Dow Chemical Co.).

The photoinitiators which are useful in the compositions of the invention are cationic and include these three types. viz. aromatic iodonium complex salts, aromatic sulfonium complex salts and metallocene salts. Useful aromatic iodonium complex salts have the formula: 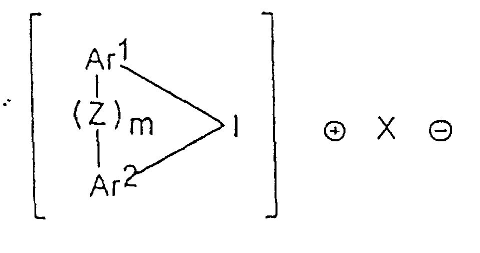 where Ar¹ and Ar² are aromatic groups having 4 to 20 carbon atoms and are selected from the group consisting of phenyl, thienyl, furanyl, and pyrazolyl groups. Z is selected from the group consisting of oxygen; sulfur; 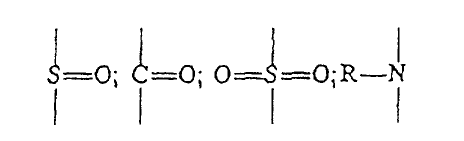 where R is aryl (of 6 to 20 carbons, such as phenyl) or acyl (of 2 to 20 carbons, such as acetyl, benzoyl, etc.); a carbon-to-carbon bond; or 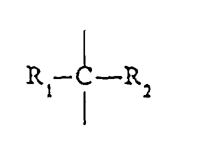 where R₁ and R₂ are selected from hydrogen, alkyl radicals of 1 to 4 carbons, and alkenyl radicals of 2 to 4 carbons. The value of m is zero or 1 and X is a halogen-containing complex anion selected from tetrafluoroborate, hexafluorophosphate, pentafluorohydroxyantimonate, hexafluoroarsenate, and hexafluoroantimonate.

The Ar¹ and Ar² aromatic groups may optionally have one or more fused benzo rings (e.g., naphthyl, benzothienyl, dibenzothienyl, benzofuranyl, dibenzofuranyl, etc.). The aromatic groups may also be substituted, if desired, by one or more non-basic groups if they are essentially non-reactive with epoxide and hydroxyl functionalities.

Useful aromatic iodonium complex salts are described more fully in U.S. Patent No. 4,256,828. The preferred aromatic iodonium complex salts are diaryliodonium hexafluorophosphate and diaryliodonium hexafluoroantimonate.

The aromatic iodonium complex salts useful in the compositions of the invention are photosensitive only in the ultraviolet region of the spectrum. They, however, can be sensitized to the near ultraviolet and the visible range of the spectrum by sensitizers for known photolyzable organic halogen compounds. Illustrative sensitizers include aromatic amines and colored aromatic polycyclic hydrocarbons.

Aromatic sulfonium complex salt photoinitiators suitable for use in the compositions of the invention can be defined by the formula 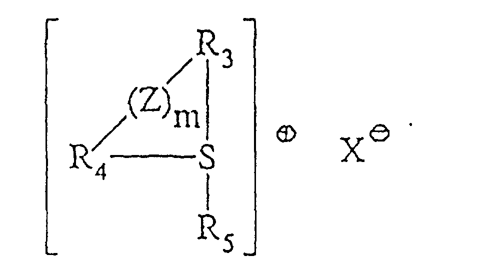 wherein R₃, R₄ and R₅ can be the same or different, provided that at least one of the groups is aromatic. Thcsc groups can be selected from aromatic moieties having 4 to 20 carbon atoms (e.g., substituted and unsubstituted phenyl, thienyl, and furanyl) and alkyl radicals having 1 to 20 carbon atoms. The term "alkyl" includes substituted alkyl radicals (for example, substituents such as halogen, hydroxy, alkoxy, aryl). Preferably, R₃, R₄ and R₅ are each aromatic. Z, m and X are all as defined above with regard to the iodonium complex salts.

If R₃, R₄ or R₅ is an aromatic group, it may optionally have one or more fused benzo rings (e.g, naphthyl, benzothienyl, dibenzothienyl, benzofuranyl, dibenzofuranyl, etc.) Such aromatic groups may also be substituted, if desired, by one or more non-basic groups that are essentially non-reactive with epoxide and hydroxyl functionality.

The triaryl-substituted salts such as triphenylsulfonium hexafluoroantimonate are preferred. Useful sulfonium complex salts are described more fully in U.S. Patent No. 4,256,828.

The aromatic sulfonium complex salts useful in the invention are inherently photosensitive only in the ultraviolet region of the spectrum. They, however, are sensitized to the near ultraviolet and the visible range of the spectrum by a select group of sensitizers such as described in U.S. Patent No. 4,256,828.

Useful metallocene salts can have the formula: 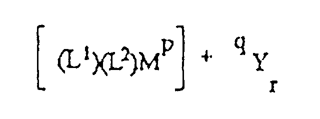 wherein
- M^{p}: represents a metal selected from Cr, Mo, W, Mn, Re, Fe, and Co;
- L¹: represents 1 or 2 ligands contributing π-electrons that can be the same or different ligand selected from substituted and unsubstituted η³-allyl, η⁵-cyclopentadienyl, and η⁷-cycloheptatrienyl and η⁶-aromatic compounds selected from η⁶-benzene and substituted η⁶-benzene compounds and compounds having 2 to 4 fused rings each capable of contributing 3 to 8 π-electrons to the valence shell of M^{P};
- L²: represents none or 1 to 3 ligands contributing an even number of sigma-electrons that can be the same or different ligand selected from carbon monoxide or nitrosonium;
with the proviso that the total electronic charge contributed to M^{p} by L¹ and L² plus the ionic charge on the metal M^{p} results in a net residual positive charge of q to the complex, and
- q: is an integer having a value of 1 or 2, the residual electrical charge of the complex cation;
- Y: is a halogen-containing complex anion selected from AsF₆₋, SbF₆₋ and SbF₅OH-; and
- r: is an integer having a value of 1 or 2, the numbers of complex anions required to neutralize the charge q on the complex cation.

Useful metallocene salts are described more fully in U.S. Patent No. 5,089,536. The metallocene salts may be used in conjunction with a reaction accelerator such as an oxalate ester of a tertiary alcohol.

Useful commercially available photoinitiators include FX-512, an aromatic sulfonium complex salt (3M Company), an aromatic sulfonium complex salt (Union Carbide Corp.), UVI-6974, an aromatic sulfonium complex salt (Union Carbide Corp), and IRGACURE™ 261, a metallocene complex salt (Ciba-Geigy).

Optionally, the hot melt compositions of the invention may further comprise a hydroxyl-containing material. The hydroxyl-containing material may be any liquid or solid organic material having hydroxyl functionality of at least 1, preferably at least 2, and most preferably about 3. The hydroxyl-containing organic material should be free of other "active hydrogen" containing groups such as amino and mercapto moieties. The hydroxyl-containing organic material should also be substantially free of groups which may be thermally or photolytically unstable so that the material will not decompose or liberate volatile components at temperatures below about 100°C or when exposed to actinic or electron beam radiation during curing.

Preferably the organic material contains two or more primary or secondary aliphatic hydroxyl groups (i.e., the hydroxyl group is bonded directly to a non-aromatic carbon atom). The hydroxyl group may be terminally situated, or may be pendent from a polymer or copolymer. The number average equivalent weight of the hydroxyl-containing material is preferably about 31 to 2250, more preferably about 80 to 1000, and most preferably about 80 to 350.

Representative examples of suitable organic materials having a hydroxyl functionality of 1 include alkanols, monoalkyl ethers of polyoxyalkylene glycols, and monoalkyl ethers of alkylene glycols.

Representative examples of useful monomeric polyhydroxy organic materials include alkylene glycols (e.g., 1,2-ethanediol, 1,3-propanediol, 1,4-butanediol, 2-ethyl-1,6-hexanediol, bis(hydroxymethyl)cyclohexane, 1,18-dihydroxyoctadecane, and 3-chloro-1,2-propanediol), polyhydroxyalkanes (e.g., glycerine, trimethylolethane, pentacrythritol, and sorbitol) and other polyhydroxy compounds such as N,N-bis(hydroxyethyl)benzamide, 2-butene-1,4-diol, castor oil, etc.

Representative examples of useful polymeric hydroxyl-containing materials include polyoxyalkylene polyols (e.g., polyoxyethylene and polyoxypropylene glycols and triols of equivalent weight of 31 to 2250 for the diols or 80 to 350 for triols), polytetramethylene oxide glycols of varying molecular weight, hydroxyl-terminated polyesters, and hydroxyl-terminated polylactones.

Useful commercially available hydroxyl-containing materials include the POLYMEG series (available from QO Chemicals, Inc.) of polytetramethylene oxide glycols such as POLYMEG 650, 1000 and 2000; the TERATHANE series (from E.I. duPont de Ncmours and Company) of polytetramethylene oxide glycols such as TERATHANE 650, 1000 and 2000; POLYTHF, a polytetramethylene oxide glycol from BASF Corp.; the BUTVAR series (available from Monsanto Chemical Company) of polyvinylacetal resins such as BUTVAR B-72A, B-73, B-76, B-90 and B-98; the TONE series (available from Union Carbide) of polycaprolactone polyols such as TONE 0200, 0210, 0230, 0240, and 0260; the DESMOPHEN series (available from Miles Inc.) of saturated polyester polyols such as DESMOPHEN 2000, 2500, 2501, 2001KS, 2502, 2505, 1700, 1800, and 2504; the RUCOFLEX series (available from Ruco Corp.) of saturated polyester polyols such as S-107, S-109, S-1011 and S-1014; VORANOL 234-630 (a trimethylol propane) from Dow Chemical Company; VORANOL 230-238 (a glycerol polypropylene oxide adduct) from Dow Chemical Company; the SYNFAC series (from Milliken Chemical) of polyoxyalkylated bisphenol A's such as SYNFAC 8009, 773240, 8024, 8027, 8026, and 8031; and the ARCOL series (from Arco Chemical Co.) of polyoxypropylene polyols such as ARCOL 425, 1025, 2025, 42, 112, 168, and 240.

The amount of hydroxyl-containing organic material used in the compositions of the invention may vary over a broad range, depending on factors such as the compatibility of the hydroxyl-containing material with both the epoxy-containing material and the polyester component, the equivalent weight and functionality of the hydroxyl-containing material, and the physical properties desired in the final cured composition.

The optional hydroxyl-containing material is particularly useful in tailoring the flexibility of the hot melt compositions of the invention. As the equivalent weight of the hydroxyl-containing material increases, the flexibility of the hot melt composition correspondingly increases although there may be a consequent loss in cohesive strength. Similarly, decreasing equivalent weight may result in a loss of flexibility with a consequent increase in cohesive strength. Thus, the equivalent weight of the hydroxyl-containing material is selected so as to balance these two properties, the appropriate balance depending on the particular application.

Flexible melt sealing compositions are useful in forming flexible sheets for sealing performance at lower temperatures, i.e., below about 0°C. If the hydroxyl-containing material is used to tailor the flexibility of the melt scaling composition, polyoxyethylene glycols and triols having an equivalent weight of about 31 to 2250 for the glycols and 80 to 350 for the triols are particularly preferred. Even more preferred are polyoxypropylene glycols and triols having an equivalent weight of about 31 to 2250 for the glycols and an equivalent weight of about 80 to 350 for the triols.

The melt-flowable compositions of the invention comprise from 0.01 to 95 parts per 100 parts total of the epoxy-containing material and, correspondingly, from 99.99 to 5 parts of the polyester component. More preferably, the melt-flowable compositions of the invention comprise from 0.1 to 80 parts of the epoxy-containing material and, correspondingly, from 99.9 to 20 pans of the polyester component. Most preferably, the hot melt compositions of the invention comprise from 0.5 to 60 parts of the epoxy-containing material, and, correspondingly, from 99.5 to 40 parts of the polyester component. Increasing amounts of the epoxy-containing material relative to the polyester component generally result in melt-flowable compositions having higher ultimate strength and heat resistance but less flexibility, and lower viscosity. Increasing amounts of the polyester component generally result in melt-flowable compositions having lower ultimate strength, heat resistance and higher viscosity but greater flexibility and green strength build-up. Thus, the relative amounts of these two ingredients are balanced depending on the properties sought in the final composition.

The photoinitiator, if used, is included in an amount ranging from about 0.01 to 4% based on the combined weight of the epoxy-containing material and the polyester component. Increasing amounts of the photoinitiator can result in an accelerated curing rate. Increased amounts of photoinitiator can also result in reduced energy exposure requirements. The amount of the photoinitiator is determined by the rate at which the composition should cure, the intensity of the radiation source, and the thickness of the composition.

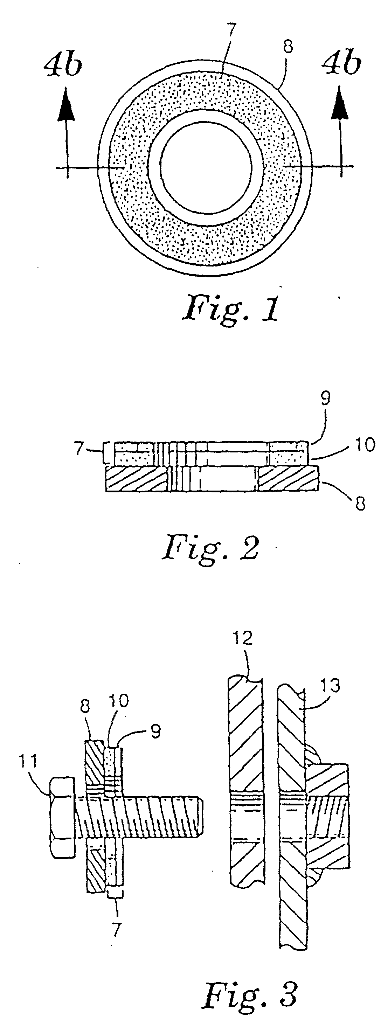

In some applications, it is useful to initially radiation cure the melt-flowable composition only at the surface of the sheet, and subsequently thermally cure the entire sheet later. For example, an actinic radiation curable epoxy polyester sheet material is exposed to actinic radiation to cure the surface of the sheet material, and then placed in the aforementioned roof ditch such that the sheet material forms a concave surface along the roof ditch as shown in FIG. 1b. The strip is then heated to a temperature sufficient to bond the strip to the surfaces within the ditch, and cure the entire thickness of the sheet. The result is a skinned surface on the sheet material that aids in providing a smooth surface for visual and functional reasons.

Melt-flowable compositions which include a polyether polyol may be useful in allowing the melt-flowable sheet to conform to the surface and displace trapped air before forming a permanent bond to the substrate.

Additionally, and optionally, up to 50% of the total volume of the composition (based on the epoxy-containing material, the polyester component, the photoinitiator and the optional hydroxyl-containing material), may be provided by various fillers, adjuvants, additives and the like such as silica, glass, clay, talc, pigments, colorants, glass beads or bubbles, glass or ceramic fibers, antioxidants, and the like so as to reduce the weight or cost of the composition, adjust viscosity, and provide additional reinforcement. Fillers and the like which are capable of absorbing the radiation used during the curing process should be used in an amount that does not adversely affect the curing process.

The melt-flowable compositions comprising the foregoing polyester and epoxy polyester materials are prepared by mixing the various ingredients in a suitable vessel, preferably one that is not transparent to actinic radiation if a photoinitiator is used, at an elevated temperature sufficient to liquefy the components so that they can be efficiently mixed with stirring until the components are thoroughly melt blended but without thermally degrading the materials. The components may be added simultaneously or sequentially, although it is preferred to first blend the epoxy-containing material and the polyester component followed by the addition of the hydroxyl-containing material and then the photoinitiator. The melt-flowable compositions should be compatible in the melt phase, i.e., there should be no visible gross phase separation among the components.

The melt-flowable sheet made with epoxy polyester compositions may be tacky or tack-free. A blend of liquid and solid epoxy-containing materials is useful in providing a tacky sheet.

In use, the melt-flowable sheet materials containing a photoinitiator can be exposed to a radiation source to activate the catalyst for curing of the cpoxy-containing material before, during, or after the sheet material has been applied to the substrate. Activation of the catalyst occurs upon exposure of the sheet materials to any source emitting actinic radiation (i.e., radiation having a wavelength in the ultraviolet or visible spectral regions). Suitable sources of radiation include mercury, xenon, carbon arc, tungsten filament lamps, quartz halogen lamps, fluorescent lights, sunlight, etc. Exposure times must be sufficient to activate the catalyst and may vary from less than about 1 second to 20 minutes or more depending upon both the amount and the type of reactants involved, the radiation source, the distance from the radiation source, and the thickness of the sheet.

The time needed to reach full cure may be accelerated by curing the sheet materials with heat, such as in an oven. The time and temperature of the cure will vary depending upon the glass transition temperature of the polyester component, the concentration of the photoinitiator, the radiation exposure conditions, and the like. Typical cure cycle conditions range from 5 to 30 minutes with temperatures ranging from about 50°C to 200°C. More than one heating cycle may be used to cure the sheet materials.

The compositions may also be cured by exposure to electron beam radiation. The dosage necessary is generally from less than 1 megarad to 100 megarads or more. The rate of curing tends to increase with increasing amounts of photoinitiator at a given light exposure or irradiation. The rate of curing also increases with increased radiation intensity or electron dosage.

Suitable thermosettable PSA's include a thermosettable component and a pressure-sensitive adhesive component. The thermosettable component will generally be present in an amount of about 25 to 150 pans by weight based on 100 pans by weight of the PSA component.

Coatable compositions for the thermosettable PSA can be formed by various methods which include blending together a solvent-based PSA, a thermosettable resin, and thermosettable curatives; dissolving a pressure-sensitive elastomer, such as a nitrile butadiene rubber, in a solvent, and mixing with thermosettable resins and curatives; and blending monomers or prepolymers useful for making a PSA, such as the monomers for making the above-mentioned acrylate copolymers, with thermosettable resins and curatives, and photopolymerizing the blends.

Materials useful for the PSA component include those described above for a PSA. Preferred materials include acrylonitriles and acrylates, and especially preferred are acrylates.

The thermosetting components are thermosetting resins such as epoxy resins, urethane resins, and phenolic resins. Preferred thermosetting resins are epoxies and urethanes, and epoxies are most preferred. Useful epoxy resins are described above. The epoxy resin may be solid, liquid, or a mixture thereof, as long as the epoxy can be mixed with the PSA component. Preferred epoxies include phenolic epoxy resins, bisphcnol cpoxy resins, hydrogenated epoxy resins, bisphenol epoxy resins, aliphatic epoxy resins, halogenated bisphenol epoxy resins, novalac epoxies, and mixtures thereof, and most preferred epoxies include diglycidyl ethers of bisphenol A.

In a preferred embodiment, the thermosettable PSA is the photopolymerized reaction product of a composition having (i) a prepolymeric (i.e., partially polymerized to a viscous syrup typically between about 100 and 10,000 centipoises) or monomeric syrup of an acrylic or methacrylic acid ester as described above; (ii) optionally, a reinforcing comonomer as described above; (iii) an epoxy resin; (iv) a photoinitiator; and (v) a heat activatable hardener for the epoxy. The adhesives can be prepared according to the procedures found in U.S. Patent No. 5,086,088, incorporated herein by reference.

The photoinitiators useful for polymerizing the prepolymeric or monomeric syrup may be any conventional free radical initiator activatable by, for example, ultraviolet light. An example of a suitable photoinitiator is 2,2-dimethoxy-2-phenyl acetophenone (Irgacure™651 available from Ciba-Geigy Corporation). The photoinitiator is used in an amount sufficient to polymerize the monomers, typically about 0.01 to 5 parts by weight per 100 parts of the prepolymeric or monomeric syrup.

The heat activatable curative is added to the composition to effect curing of the epoxy resin when heated. The hardener may be any type, but preferably, it is an amine type hardener such as dicyandiamide and polyamine salts. Suitable commercial curatives are available under the Omicure™ trademark from Omicron Chemical, and under the Ajicure™ trademark from Ajinomoto Chemical. The curative is used in an amount sufficient to cure the epoxy resin, typically, in an amount from 0.1 to 20 parts by weight, and preferably, 0.5 to 10 pans by weight per 100 pans of epoxy resin.

It is useful to further add an accelerator to the adhesive composition because the heat to which the composition is exposed may be insufficient to fully activate the curing agents to cure the epoxy resin. The accelerator allows the adhesive to cure at a lower temperature and/or for shorter periods of heat exposure. Imidazoles and urea derivatives are particularly preferred in the practice of the present invention and useful compounds include 2,4-diamino-6-(2'-methyl imidazole)-ethyl-s-triazine isocyanurate, 2-phenyl-4-benzyl-5-hydroxymethylimidazole, hexakis (imidizole)nickel phthalate, and toluene bis-dimethylurea. The accelerator may be used in an amount up to 20 parts by weight per 100 pans by weight of the epoxy resin.

In making the melt-flowable sheet with a thermosettable PSA the aforementioned solvent based compositions are coated onto a flexible web, preferably a silicone coated release liner, at the desired adhesive thickness and the solvent is removed by heating the adhesive to a temperature below the thermosetting temperature. The adhesive is then laminated to the melt-flowable sheet for further use. Alternatively, the compositions can be coated directly onto the melt-flowable sheet and dried at temperatures below the hot melt activation temperature.

In an alternative embodiment, a photopolymerized syrup composition having the above described thermosettable PSA ingredients is prepared by coating the the syrup composition onto a silicone release liner and photopolymerizing in an inert atmosphere, i.e., substantially oxygen-free atmosphere, e.g., a nitrogen atmosphere, and irradiating the composition with ultraviolet light. A sufficiently inert atmosphere can be achieved by covering the coating with a second polymeric film which is substantially transparent to UV radiation, and irradiating through the film. The adhesive is then laminated to the melt-flowable layer. Alternatively, a sheet of melt-flowable layer may be used in place of either the top or the bottom release liner.

Further, a nonwoven or reinforcing scrim may be inserted between the layers or embedded within the thermoset PSA layer to provide additional strength for handling purposes.

The aforementioned melt-flowable sheet having a thermosettable PSA is particularly useful for washer bonding in assembling automobiles. The washer is prepared by laminating the washer to a piece of the thermosettable PSA that has been cut, e.g., die cut or punch pressed, to the size and shape of the washer. The cut thermosettable PSA is then laminated to the washer by hand or by robotized machinery with the melt-flowable side exposed and available for bonding at higher temperatures. Alternatively, the thermosettable PSA is bonded to a sheet of metal suitable for making washers. The melt-flowable layer of the sheet is tack-free at room temperature. Washers of the desired dimension are then stamped from the metal sheet.

In use, the washer is used to tighten a bolt to a door hinge as the door is aligned and attached to the automobile frame. The automobile is then painted and put through oven curing cycles to dry and cure the paint. The melt-flowable side of the sheet also melts sufficiently in the oven to bond aggressively to the metal surface of the frame. The doors are then removed for installing interior parts, and the doors can be re-attached in the aligned position as indicated by the position of the washers. This method of washer bonding allows for automatic dispensing of the washers in assembly as well as eliminating liners and adhesive contamination problems associated with previously known methods of bonding washers.

In the washer bonding application the melt-flowable sheet is preferably from about 10 to 250 micrometers thick, and most preferably, 25 to 100 micrometers thick. Thicknesses greater than about 250 micrometers may result in leaking of the melt-flowable material from the washer during the thermosetting operation which can affect the strength of the bond between the washer and the automobile frame. The thermosetting pressure-sensitive adhesive layer should range from about 10 to 300 micrometers, and preferably, from about 30 to 200 micrometers.

### TEST PROCEDURES

### OVERLAP SHEAR STRENGTH

Two 2.5 cm by 5 cm PPG ED-11 panels (electrodeposition primed steel available from Advance Coaling Technologies, Inc., also referred to herein as ED-11 panels) were bonded with a 2.54 cm x 1.27 cm overlap area using a strip of melt-flowable tape measuring 2.54 cm by 1.27 cm. The sample is heated to bond the two panels together at temperatures indicated in the specific examples and then cooled to room temperature for at least 16 hours. The panels are then tested in an Instron™ tensile testing machine using a crosshead speed of 5 cm per minute. The force at adhesive failure is recorded in megaPascals (MPa).

### ADHESIVE SHEAR STRENGTH FOR WASHER BONDING

The adhesive shear strength was measured according to JISK6850. Two 1.6 mm thick steel panels were used as the substrates. The adhesive is placed between the panels and then cured at a temperature of 140°C with a pressure of 500 g/cm² for 60 minutes. The panels are then cooled to room temperature before testing. Using a tensile tester, the adhesive shear strength is measured at a jaw separation rate of 50 mm/min.

The preferred adhesives have a shear strength greater than 50 kgf/cm².

### PUNCHING ABILITY

A pressure operated punch press was used to punch the bonding materials in the form of a circle corresponding to the hole in a washer with a pressure of 30 kgf/cm². The number of samples per bonding material was five. The samples were assessed under the criteria below.

Good: no punching failure. The pressure-sensitive thermosetting adhesive does not leak out of the hot melt film. The cross section looks good.

Relatively hard to punch: one or two samples are punched imperfectly. The thermosetting adhesive slightly leaks out of the hot melt film.

### LEAKAGE OF AN ADHESIVE AGENT

The samples used in measuring the adhesive shear strength were used to visually check for leakage of a pressure-sensitive thermosetting adhesive or the hot melt film from the steel panels. The criterion is presented below:
No leakage: Ok
Slight amount of leakage: Fair
Large amount of leakage: Poor

Specific embodiments of the invention will be illustrated by the following nonlimiting examples. Parts refer to parts by weight unless otherwise indicated.

### Example 1

A pressure-sensitive adhesive composition was prepared by mixing 76 parts of butyl acrylate, 24 parts N-vinyl pyrrolidone, and 0.04 parts Irgacure™651 photoinitiator (2,2-dimethoxy-2-phcnyl acetophenone available from Ciba Geigy) and photopolymerizing with an ultraviolet (UV) light source under a constant nitrogen purge to form a syrup having a viscosity of about 2000 cps. With constant mixing, the following materials were added to 100 parts of the acrylate syrup and mixed for about two hours: 0.1 parts Irgacure™651, 40 parts diglycidyl ether oligomer of bisphenol-A (Epikote™1001 available from Shell Chemical Co.), 50 parts diglycidyl ether of bisphenol A (ELA 128 available from Shell Chemical Co.), 6.0 parts dicyandiamide (CG1200 from Omicron Chemical Co.), 3.5 parts 2,4-diamino-6-[2'-methylimidazolyl-(1')]-ethyl-S-triazine isocyanurate adduct (2MA-OK available from Shikoku Chemical Co., Ltd.), 5.0 parts fumed silica (Acrosil™ 972 available from DeGussa), and 0.03 parts of hexanediol diacrylate. The mixture was then degassed, and knife coated to a thickness of 0.3 ounces per square yard on top a polyamide nonwoven (CEREX from Fiberweb N.A.) placed on top of a transparent silicone coated polyester release liner having a thickness of about 0.05 mm. A similar release liner was placed on top of the coated composite, and the coated mixture was photopolymerized with ultraviolet lamps at an average intensity of about 1.1 mW/cm² above and below the web, such that a total energy of 500 mJ/cm² were used. The lamps used had about 90% of the emission between 300 and 400 nm, with a maximum at 351 nm. The resulting thermosetting pressure-sensitive adhesive tape (TPSA) layer had a thickness of about 0.3 mm.

A hot melt adhesive layer (HMA) was prepared by extruding an ethylene acrylic acid polymer having an acrylic acid content of 6.5% (PRIMACOR™ 3330, available from Dow Chemical, Ltd.) at a temperature of about 250°C using a T die. The thickness of the layer was 50 micrometers.

An adhesive tape composite was prepared by removing one of the liners from the pressure-sensitive adhesive tape and laminating the hot melt adhesive layer to it. The composite was tested for adhesive shear strength, punching ability, and leakage. Test results are shown in Table 1.

### Example 2

A thermosetting pressure-sensitive adhesive was prepared by dissolving 150 grams of an acrylonitrile rubber (Nippol 1001 available from Nippon Zeon Co., Ltd.) in 400 grams of methyl ethyl ketone. The following materials were then added to the solution and mixed for 24 hours to obtain a homogeneous mixture: 100 grams of Epicoat 828, 100 grams Epikote™ 1001, 20 grams dicyandiamide, 235 grams Amicure PN (epoxy curative available from Ajinomoto Co., Inc.), and 20 grams of silica powder (Aerosil™A-200 available from Nippon Acrosil Co., Ltd.). The mixture was then knife coated on a silicone coated polyester liner, and dried for 15 minutes at 70°C. The resulting thermosettable pressure-sensitive adhesive layer had a thickness of 100 micrometers.

An adhesive composite was prepared by laminating the thermosettable pressure-sensitive adhesive layer to a 50 micrometer hot melt adhesive layer prepared as described in Example 1. Test results are shown in Table 1.

### Examples 3-6

Adhesive composites were prepared as described in Example 2 having varying thicknesses of each layer as shown in Table 1. Test results are also shown.

**Tabel 1**

| EX | TPSA Thickness Micrometers | HMA Thickness Micrometers | Shear Strength kg/cm2 | Punching Ability | Leakage of Bonding Material |
|---|---|---|---|---|---|
| 1 | 300 | 50 | Not tested | OK | OK |
| 2 | 100 | 50 | 162 | OK | OK |
| 3 | 100 | 100 | 175 | OK | OK |
| 4 | 100 | 200 | 166 | OK | OK |
| 5 | 50 | 100 | 164 | OK | OK |
| 6 | 300 | 50 | Not tested | Not tested | Not tested |

### Examples 7-10

The thermosetting pressure-sensitive adhesives of Example 1 were laminated onto various hot melt adhesive layers as shown in Table 2. The thermosetting pressure-sensitive adhesive layer was 100 micrometers thick. The hot melt adhesive layers were prepared by extruding the hot melt adhesive resins shown in Table 2. Test results are shown in Table 3.

**TABLE 2**

| EX | Resin Type | Product Designation/Manufacturer | Melting Point - (oC) | Thickness - micrometers |
|---|---|---|---|---|
| 7 | Olefinic | DAF-899/Dow Chemical, Ltd. | 83 | 75 |
| 8 | Olefinic | 8930/Toray Synthetic Film Corp. | 90 | 50 |
| 9 | Polyester | 4152B/Toray Synthetic Film Corp. | 120 | 65 |
| 10 | Polyester | 1152B/Toray Synthetic Film Corp. | 80 | 65 |

**TABLE 3**

| EX | Shear Strength - kg/cm2 | Punching Ability | Leakage of Bonding Material |
|---|---|---|---|
| 7 | 170 | OK | OK |
| 8 | 90 | OK | OK |
| 9 | 165 | OK | OK |
| 10 | 174 | OK | OK |

## Claims

1. A sheet material comprising a first layer and a second layer adjacent said first layer, said first layer comprising a thermosettable composition that comprises a pressure-sensitive thermosetting adhesive and said second layer comprising a thermoplastic, melt-flowable composition that comprises a polymer that is semi-crystalline at room temperature

## Patentansprüche

1. Flächiges Material, umfassend eine erste Schicht und eine an diese erste Schicht angrenzende zweite Schicht, wobei die erste Schicht eine wärmehärtbare Zusammensetzung umfasst, die ein thermoplastisches Haftklebemittel umfasst, und wobei die zweite Schicht eine thermoplastische, schmelzfließfähige Zusammensetzung umfasst, die ein Polymer umfasst, das bei Raumtemperatur teilkristallin ist.

## Revendications

1. Matière de feuille comprenant une première couche et une deuxième couche adjacente à ladite première couche, ladite première couche comprenant une composition thermodurcissable qui comprend un adhésif thermodurcissant auto-adhésif et ladite deuxième couche comprenant une composition pouvant s'écouler à l'état fondu, thermoplastique qui comprend un polymère qui est semi-cristallin à la température ambiante.
